# EUROPEAN PATENT SPECIFICATION

(11) **EP 2 842 118 B1**
(45) Date of publication and mention of the grant of the patent: **08.01.2020**
(21) Application number: 13723593.3
(22) Date of filing: 26.04.2013
(51) Int. Cl.: G09B 5/00, G09B 19/24

(54) **SYSTEMS AND METHODS FOR TRAINING A WELDING OPERATOR**
SYSTEME UND VERFAHREN ZUM TRAINIEREN EINES SCHWEISSERS
SYSTÈMES ET PROCÉDÉS DE FORMATION D'UN SOUDEUR

(30) Priority: 27.04.2012 US 201261639414 P; 27.02.2013 US 201313779418
(43) Date of publication of application: 04.03.2015
(73) Proprietor: Illinois Tool Works Inc., Glenview, IL 60025 (US)
(72) Inventor: PATTERSON, Jon M., Glenview, Illinois 60025 (US); ALBRECHT, Bruce P., Glenview, Illinois 60025 (US)
(74) Representative: Trinks, Ole
(86) International application number: PCT/US2013/038371
(87) International publication number: WO 2013/163520

(56) References cited:
- WO-A1-2006/034571
- US-A1- 2011 183 304

## Description

### CROSS REFERENCE TO RELATED APPLICATIONS

*This application is a Non-provisional U.S. Patent Application of U.S. Provisional Application No.* 61/639,414*, entitled "Systems and Methods for Training a Welding Operator", filed April 27,* 2012.

### BACKGROUND

The invention relates generally to welding applications, and, more particularly, to systems and methods for training a welding operator.

Welding is a process that has become increasingly ubiquitous in various industries and applications. Such processes may be automated in certain contexts, although a large number of applications continue to exist for manual welding applications. In both cases, such welding applications rely on a variety of types of equipment to ensure that the supply of welding consumables (e.g., wire, shielding gas, etc.) is provided to the weld in an appropriate amount at the desired time. For example, metal inert gas (MIG) welding typically relies on a wire feeder to enable a welding wire to reach a welding torch. The wire is continuously fed during welding to provide filler metal. A power source ensures that arc heating is available to melt the filler metal and the underlying base metal (see US-A-20110183304).

The quality and efficiency of a weld may depend at least partially on the skill level of the welding operator. For example, a more experienced welding operator may perform welding operations at a higher quality and/or with greater efficiency than a beginning welding operator. As such, a beginning welding operator may desire to improve their weld quality and/or work efficiency. However, the welding operator may not know how to improve the weld quality and/or work efficiency of the welding operation. Further, training may not be readily available to the welding operator. Accordingly, there is a need in the field for systems and method to overcome such deficiencies.

### BRIEF DESCRIPTION

The present invention relates to a welding system and a welding method as defined in independent claims 1 and 10 respectively.

### DRAWINGS

These and other features, aspects, and advantages of the present invention will become better understood when the following detailed description is read with reference to the accompanying drawings in which like characters represent like parts throughout the drawings, wherein:
FIG. 1 is a block diagram of an embodiment of a welding system employing devices for training a welding operator in accordance with aspects of the present disclosure;
FIG. 2 is a block diagram of an embodiment of a welding device for training a welding operator in accordance with aspects of the present disclosure; and
FIG. 3 is a flow chart of an embodiment of a method for training a welding operator to use a welding system in accordance with aspects of the present disclosure.

### DETAILED DESCRIPTION

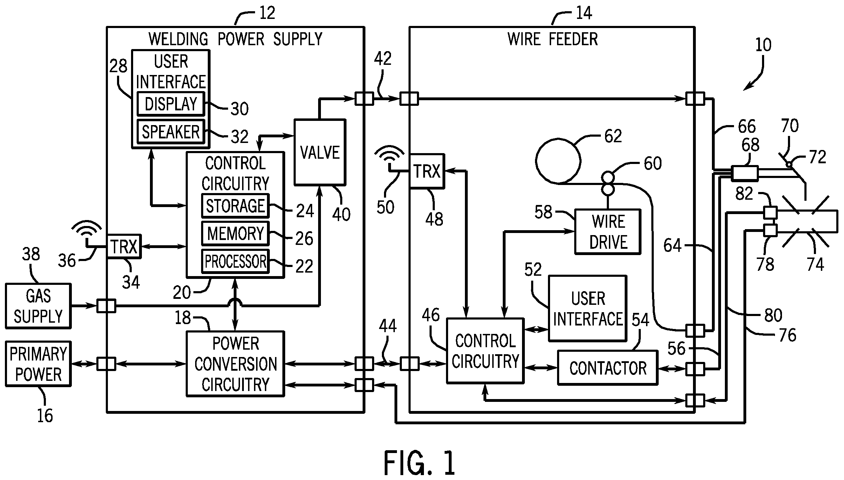

Turning now to the drawings, FIG. 1 is a block diagram of an embodiment of a welding system 10 employing devices for training a welding operator. In the illustrated embodiment, the welding system 10 is a metal inert gas (MIG) welding system, although the present techniques may be used on other welding systems, such as other gas metal arc welding (GMAW) systems, and so forth. The welding system 10 powers, controls, and supplies consumables to a welding application. The welding system 10 includes a welding power supply 12 and a voltage sensing wire feeder 14. As will be appreciated, other embodiments may include a non-voltage sensing wire feeder 14.

The welding power supply 12 receives primary power 16 (e.g., from the AC power grid, an engine/generator set, a battery, or other energy generating or storage devices, or a combination thereof), conditions the primary power, and provides an output power to one or more welding devices in accordance with demands of the system 10. The primary power 16 may be supplied from an offsite location (i.e., the primary power may originate from the power grid). Accordingly, the welding power supply 12 includes power conversion circuitry 18 that may include circuit elements such as transformers, rectifiers, switches, and so forth, capable of converting the AC input power to AC or DC output power as dictated by the demands of the system 10 (e.g., particular welding processes and regimes). Such circuits are generally known in the art.

In some embodiments, the power conversion circuitry 18 may be configured to convert the primary power 16 to both weld and auxiliary power outputs. However, in other embodiments, the power conversion circuitry 18 may be adapted to convert primary power only to a weld power output, and a separate auxiliary converter may be provided to convert primary power to auxiliary power. Still further, in some embodiments, the welding power supply 12 may be adapted to receive a converted auxiliary power output directly from a wall outlet. Indeed, any suitable power conversion system or mechanism may be employed by the welding power supply 12 to generate and supply both weld and auxiliary power.

The welding power supply 12 includes control circuitry 20. The control circuitry 20 includes at least one controller or processor 22 that controls the operations of the welding power supply 12, and may be configured to receive and process multiple inputs regarding the performance and demands of the system 10. The processor 22 may be used to transfer video or image data to a device that can display the video or image data. In certain embodiments, the video data may include a tutorial video (e.g., how to make a weld, how to improve a weld, etc.), a training video, a diagnostics video, a troubleshooting video, an informational video, a servicing video, and/or a configuration video. Moreover, in certain embodiments, the image data may include a tutorial image (e.g., how to make a weld, how to improve a weld, etc.), a training image, a diagnostics image, a troubleshooting image, an informational image, a servicing image, and/or a configuration image. Furthermore, image data may include pictures, spreadsheets, figures, flow charts, and so forth. The processor 22 may be used to transfer help screens, audio, multimedia data, or other data to an output device. As such, the processor 22 may have sufficient processing power to process video data (e.g., streaming movie files) and/or audio data (e.g., streaming audio). Furthermore, the processor 22 may include one or more microprocessors, such as one or more "general-purpose" microprocessors, one or more special-purpose microprocessors and/or ASICS, or some combination thereof. For example, the processor 22 may include one or more reduced instruction set (RISC) processors.

The control circuitry 20 may include a storage device 24 and a memory device 26. The storage device 24 (e.g., nonvolatile storage) may include ROM, flash memory, a hard drive, or any other suitable optical, magnetic, or solid-state storage medium, or a combination thereof. The storage device 24 may store data (e.g., data corresponding to a welding application, video files, audio files, etc.), instructions (e.g., software or firmware to perform data analysis on the welding application data), and any other suitable data. As will be appreciated, data that corresponds to a welding application may include the attitude (e.g., orientation) of a welding torch, a distance between the contact tip and workpiece, voltage, current, welding device settings, and so forth.

The memory device 26 may include a volatile memory, such as random access memory (RAM), and/or a nonvolatile memory, such as read-only memory (ROM). The memory device 26 may store a variety of information and may be used for various purposes. For example, the memory device 26 may store processor-executable instructions (e.g., firmware or software) for the processor 22 to execute, such as instructions for determining deficiencies in data that corresponds to a welding application or instructions for determining a training video that corresponds to deficiencies in the data. In addition, a variety of control regimes for various welding processes, along with associated settings and parameters may be stored in the storage device 24 and/or memory device 26, along with code configured to provide a specific output (e.g., initiate wire feed, enable gas flow, capture welding current data, detect short circuit parameters, determine amount of spatter, etc.) during operation.

The welding power supply 12 includes a user interface 28. The control circuitry 20 may receive input from the user interface 28 through which a user may choose a process and input desired parameters (e.g., voltages, currents, particular pulsed or non-pulsed welding regimes, and so forth). The user interface 28 may receive inputs using any input device, such as via a keypad, keyboard, buttons, touch screen, voice activation system, etc. As such, the user interface 28 allows an operator to select video data and/or audio data to be played. Furthermore, the control circuitry 20 may control parameters input by the user as well as any other parameters. Specifically, the user interface 28 may include a display 30 for presenting, showing, or indicating, information to an operator (e.g., showing the selected video data, such as tutorial videos, training videos, diagnostics videos, troubleshooting videos, configuration videos, etc.). The user interface 28 may also include a speaker 32 for receiving audio data from the processor 22. In certain embodiments, the audio data provided to the speaker 32 may be associated with the video data provided to the display 30. The control circuitry 20 may include interface circuitry for communicating data to other devices in the system 10, such as the wire feeder 14. The welding power supply 12 includes a transceiver 34 for wirelessly communicating 36 with other welding devices. In certain embodiments, the welding power supply 12 may communicate with other welding devices using a wired connection, or some other communication method.

A gas supply 38 provides shielding gases, such as argon, helium, carbon dioxide, and so forth, depending upon the welding application. The shielding gas flows to a valve 40, which controls the flow of gas, and if desired, may be selected to allow for modulating or regulating the amount of gas supplied to a welding application. The valve 40 may be opened, closed, or otherwise operated by the control circuitry 20 to enable, inhibit, or control gas flow through the valve 40. For example, when the valve 40 is closed, shielding gas may be inhibited from flowing through the valve 40. Conversely, when the valve 40 is opened, shielding gas is enabled to flow through the valve 40. Shielding gas exits the valve 40 and flows through a cable or hose 42 (which in some implementations may be packaged with the welding power output) to the wire feeder 14 which provides the shielding gas to the welding application.

Welding power flows through a cable 44 to the wire feeder 14. The wire feeder 14 may use the welding power to power the various components in the wire feeder 14, such as to power control circuitry 46. The control circuitry 46 controls the operations of the wire feeder 14. The wire feeder 14 also includes a transceiver 48 for wirelessly communicating 50 with the welding power supply 12, or another device (e.g., either directly or through a network). In some embodiments, the wire feeder 14 may communicate with other welding devices using a wired connection.

The wire feeder 14 includes a user interface 52. The control circuitry 46 may receive input from the user interface 52, such as via methods and devices described in relation to the user interface 28. Furthermore, the control circuitry 46 may display information (e.g., on a display of the user interface 52) to an operator, such as voltage, current, wire speed, wire type, video files, and so forth. A contactor 54 (e.g., high amperage relay) is controlled by the control circuitry 46 and configured to enable or inhibit welding power to flow to a weld power cable 56 for the welding application. In certain embodiments, the contactor 54 may be an electromechanical device, while in other embodiments the contactor 54 may be any other suitable device, such as a solid state device. The wire feeder 14 includes a wire drive 58 that receives control signals from the control circuit 46 to drive rollers 60 that rotate to pull wire off a spool 62 of wire. The wire is provided to the welding application through a cable 64. Likewise, the wire feeder 14 may provide shielding gas through a cable 66. As may be appreciated, the cables 56, 64, and 66 may be bundled together with a coupling device 68.

A torch 70 uses the wire, welding power, and shielding gas for a welding application. As will be appreciated, the torch 70 may include a user interface 72 (e.g., input device, display, etc.) that can be used to select video data and/or audio data to be presented to the welding operator. In certain embodiments, video data and/or audio data may be presented to the welding operator at the user interface 72. The user interface 72 may communicate with other devices using wired or wireless communication. The torch 70 is used to establish a welding arc between the torch 70 and a workpiece 74. In other embodiments, such as in a plasma cutting system, the torch 70 may be a plasma cutting torch. A work cable 76, which may be terminated with a clamp 78 (or another power connecting device), couples the welding power supply 12 to the workpiece 74 to complete a welding power circuit. As illustrated, a voltage sense cable 80 is coupled from the wire feeder 14 to the workpiece 74 using a sense clamp 82 (or another power connecting mechanism). Accordingly, the wire feeder 14 is connected to the welding power supply 12 so that it may operate even when a welding arc is not formed by the torch 70. Specifically, the wire feeder 14 receives welding power from the welding power supply 12 through cable 44. However, in certain embodiments, the wire feeder 14 may be powered through an alternate cable. In such embodiments, the voltage sense cable 80 may be replaced by wiring within the alternate cable. The welding power is connected to the various components in the wire feeder 14 (e.g., control circuitry 46, wire drive 58, user interface 52). A return path for the wire feeder 14 power is formed using the sense cable 80 with the sense clamp 82 connected to the workpiece 74. Further, the work cable 76 with the work clamp 78 provide the final portion of the return path to the welding power supply 12. Thus, the return path includes the cable 80, the workpiece 74, and the cable 76.

As will be appreciated, the welding system 10 may be used to provide a welding operator with training on how to weld, how to improve a weld, how to troubleshoot a weld, how to configure the welding system 10, and so forth. Such training may be provided via video and/or audio files. As described, the video and/or audio files may be selected by the welding operator using the user interface 28. For example, the welding operator may engage the system (e.g., via voice activation, touch screen, buttons, keyboard, keypad, etc.) in a training mode, a help mode (e.g., the welding operator may verbally ask or otherwise select questions to be answered), a diagnostics mode, and/or a tips mode (e.g., the welding operator may verbally ask or otherwise select tips to improve welding), and may thereby select content to be presented. In certain embodiments, the control circuitry 20 may determine which video files would be beneficial to the welding operator. For example, the control circuitry 20 may determine training videos that correspond to welding deficiencies. The welding deficiencies may be determined by the control circuitry 20 based on data stored from a welding application. The processor 22 may transfer the video and/or audio data to be presented to the welding operator. Further, the display 30 and/or speaker 32 may be used to present the training information to the welding operator. Accordingly, the welding operator may improve welding quality and/or welding efficiency by observing the presented information and following the presented techniques.

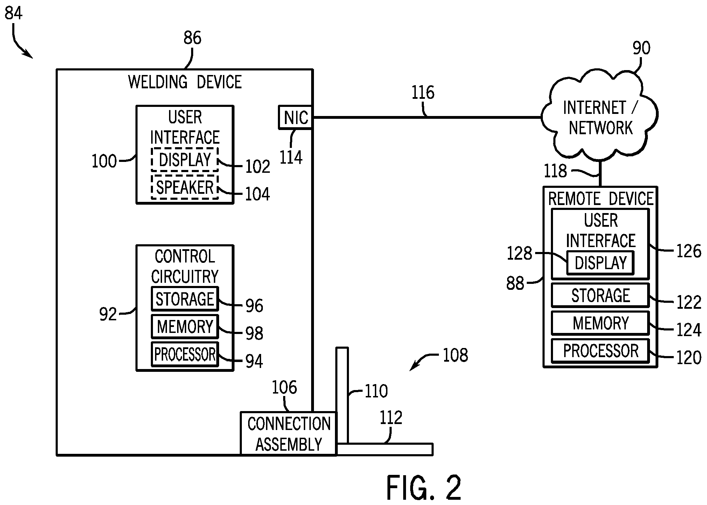

FIG. 2 is a block diagram of an embodiment of a welding system 84 that includes a welding device 86 for training a welding operator. Although the welding system 84 and the welding device 86 are used in the present embodiment, other embodiments may include a plasma cutting system, induction heating system, plasma cutting device, heat induction device, and so forth. Furthermore, the welding system 84 may include a robot, cellular phone, smartphone, iPad, server, wire feeder 14, torch 70, remote control, and so forth. A remote device 88 is used to exchange information with the welding device 86 via a communications network 90 (e.g., the Internet or another network). As illustrated, the welding device 86 includes control circuitry 92. Similar to the control circuitry 20 of the welding power supply 12, the control circuitry 92 includes at least one processor 94 that may control the operations of the welding device 86, and may be configured to receive and process a plurality of inputs regarding the performance and demands of the system 84. The processor 94 may be used to transfer video data to a device that can display the video data. The processor 94 may also be used to transfer help screens, audio, multimedia data, or other data to an output device. As such, the processor 94 may have sufficient processing power to process video data (e.g., streaming movie files) and/or audio data (e.g., streaming audio). Furthermore, the processor 94 may include one or more microprocessors, such as one or more "general-purpose" microprocessors, one or more special-purpose microprocessors and/or ASICS, or some combination thereof. For example, the processor 94 may include one or more reduced instruction set (RISC) processors. The control circuitry 92 may include a storage device 96 and a memory device 98 which may function similarly to the previously described storage device 24 and memory device 26.

The welding device 86 includes a user interface 100. The control circuitry 92 may receive input from the user interface 100 through which a user may choose a process, and input desired parameters (e.g., voltages, currents, particular pulsed or non-pulsed welding regimes, and so forth). The user interface 100 may receive inputs using a keypad, keyboard, buttons, touch screen, voice activation system, etc. As such, the user interface 100 allows an operator to select video data and/or audio data to be played. In certain embodiments, the user interface 100 may be integrated with the welding device 86, removable from the welding device 86, communicate wirelessly with the welding device 86, and/or communicate with the welding device 86 using a wired connection. For example, in some embodiments, the user interface 100 may be a smartphone, iPad, or another portable electronic device. Furthermore, the control circuitry 92 may control parameters input by the user as well as any other parameters. Specifically, the user interface 100 may include a display 102 for presenting, showing, or indicating, information to an operator (e.g., showing the selected video data, such as tutorial videos, training videos, diagnostics videos, troubleshooting videos, configuration videos, etc.). The user interface 100 may also include a speaker 104 for receiving audio data from the processor 94. In certain embodiments, the audio data provided to the speaker 104 may be associated with the video data provided to the display 102. The control circuitry 92 may include interface circuitry for communicating data to other devices in the system 84.

The welding device 86 includes a connection assembly 106 (e.g., a docking station) for coupling an external device 108. The connection assembly 106 may be wired to the welding device 86 or the connection assembly 106 may be wirelessly connected to the welding device 86. The external device 108 may be a computing device (e.g., laptop computer) that includes a display 110 and/or a base unit 112. In certain embodiments, the external device 108 may be any type of electronics device that allows the welding device 86 to select, analyze, process, and/or display video data (or other types of data). As will be appreciated, with the external device 108 coupled to the connection assembly 106, the display 110 may operate as the display of the welding device 86. Accordingly, video data may be displayed on the display 110 for a welding operator to view. Furthermore, the base unit 112 may include other user interface devices such as a keyboard, touchpad, speaker, processor, memory, storage, etc. Therefore, the base unit 112 may be used to select files and transfer audio data to an output device or to another portion of the welding device 86. In certain embodiments, the external device 108 may be considered a part of the welding device 86. In other embodiments, the external device 108 may be considered external to or remote from the welding device 86. In such an embodiment, the connection assembly 106 may be considered a data link that receives data from the external device 108 (e.g., remote device) and provides the data to the welding device 86.

The welding device 86 includes a network interface card (NIC) 114, or some other device that enables the welding device 86 to communicate with the communications network 90 (e.g., via a wired or wireless connection). In the present embodiment, a cable 116 couples the welding device 86 to the communications network 90. Further, a cable 118 couples the remote device 88 to the communications network 90. However, the remote device 88 may also be connected to the communications network 90 using any wired or wireless device. In certain embodiments, the welding device 86 may communicate directly with the remote device 88. As will be appreciated, the link between the welding device 86 and the remote device 88 may be considered a data link. For example, in the present embodiment, the data link between the welding device 86 and the remote device 88 is established using the cables 116 and 118 and the communications network 90. Furthermore, in some embodiments, a data link may be any suitable wireless connection, wired connection, or any other medium for facilitating communication between the welding device 86 and the remote device 88 (or between other devices).

The remote device 88 is a computing device (e.g., smartphone, iPad, portable electronic device) that includes at least one processor 120, storage device 122, and memory device 124. Each of these devices may incorporate features of similar devices previously described. The remote device 88 also includes a user interface 126 for providing inputs to and/or receiving outputs from the remote device 88. For example, the user interface 126 may include a display 128 for displaying data, video, etc.

During operation of the welding device 86, the remote device 88 may be used for a variety of purposes. For example, data from a welding application may be logged by the welding device 86. The logged data may be transferred from the welding device 86 to the remote device 88 (e.g., via the data link) for processing and/or analysis. In another embodiment, data from the welding application may be logged directly on the remote device 88. The remote device 88 may process and/or analyze the data that corresponds to the welding application. The processing may be performed manually or using software and/or hardware. This manual embodiment does not belong to the invention. When performed manually, service personnel may view the data, determine deficiencies or configuration problems, and determine what video files and/or audio files may be beneficial for the welding operator to improve welding techniques or system configuration. For example, the service personnel may access schematics, troubleshooting guides, diagnostic routines, and programs to determine beneficial training files. When performed using software and/or hardware, algorithms may be used to determine deficiencies in the welding application and/or in the welding system configuration and determine appropriate training files. For example, based on deficiencies in the data, the remote device 88 may determine video files and/or audio files that can be used to train the welding operator that performed the welding application. In some embodiments, the processing and/or analysis of the data may be performed by artificial intelligence devices and/or methods (e.g., to define pertinent search fields to get training videos). In certain embodiments, the remote device 88 may transfer, or initiate a transfer, of the video files and/or audio files to the welding device 86 (e.g., via the data link). In other embodiments, such as where the welding device 86 has appropriate files stored locally, the remote device 88 may send a list of files that can be used for training the welding operator. In certain embodiments, the remote device 88 may cause the video files and/or audio files to be presented on the user interface 100 of the welding device 86.

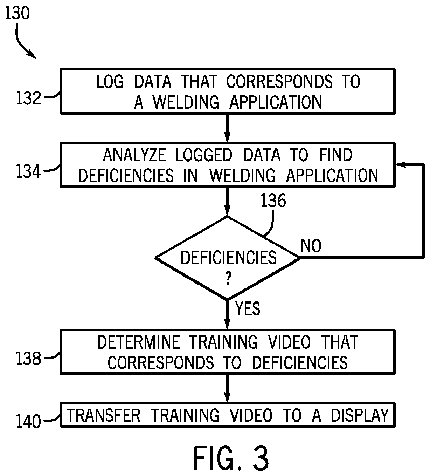

FIG. 3 is a flow chart of an embodiment of a method 130 for training a welding operator to use a welding system. At block 132, data that corresponds to a welding application performed by the welding operator is logged. In certain embodiments, the data may be logged by the welding power supply 12, the wire feeder 14, or by the welding device 86. In other embodiments, the data may be logged by the external device 108 or the remote device 88. Then, at block 134, the logged data is analyzed to find deficiencies in the welding application. For example, in certain embodiments, the logged data may be analyzed using predetermined logic (e.g., a software algorithm). This data analysis may be performed by a data analyst, support personnel, the welding power supply 12, the wire feeder 14, the welding system 10, the welding system 84, the welding device 86, the remote device 88, the external device 108, and/or another device. Accordingly, in certain embodiments, the logged data may be transferred to the remote device 88 for analysis.

Next, at block 136, a decision is made as to whether deficiencies in the welding application have been detected. If deficiencies have not been detected, the method may return to block 134. However, if deficiencies in the welding application have been detected, per block 138, a training video that corresponds to the detected deficiencies is determined. This determination may be made manually by an individual, or by computing devices previously described. In certain embodiments, a video file is determined based on the logged data, and not necessarily based on deficiencies in the logged data. Further, the video file may be selected from a group of multiple video files. Then, at block 140, the training video that corresponds to the determined deficiencies is transferred to a display of the welding system 10 for viewing. In some embodiments, the training video may be transferred from the storage of the welding system 10. In other embodiments, the training video may be transferred from the remote device 88, or some other device.

As will be appreciated, although training videos are discussed above, the method 130 is not limited to training videos and may be applied to any video data and/or audio data. Accordingly, a welding operator may have access to video files and/or audio files on demand at a welding device, such as the welding power supply 12. These files may be stored on the welding device, a remote device that may be accessed by the welding device via the Internet, or any other device that may be accessed by the welding device via wired and/or wireless communication. By using the media files described, the welding operator may be able to improve welding techniques, learn more about proper operation of the welding device, troubleshoot problems, be given tutorials, see a visual depiction of actual welding data adjacent to expected welding data, and so forth. Therefore, the welding operator may be able to improve welding quality and/or welding efficiency. Furthermore, although welding applications have been primarily discussed, the disclosed embodiments may also apply to plasma cutting and heat induction applications.

While only certain features of the invention have been illustrated and described herein, many modifications and changes will occur to those skilled in the art. It is, therefore, to be understood that the appended claims are intended to cover all such modifications and changes as fall within scope of the invention.

## Claims

1. A welding system (10; 84) comprising:
a display (30; 102) configured to show a prerecorded video selected from a plurality of prerecorded videos, wherein the plurality of prerecorded videos correspond to a welding application,
a processor (22, 94)
**characterized in that**
the processor (22, 94) is configured
to log data from an actual performed welding application, wherein the data comprise an orientation of a torch, a distance between a contact tip of the torch and a workpiece, a voltage , a current, welding device settings;
to store the logged data in a memory device (24, 26, 96, 98);
to analyze the logged data to determine a welding deficiency and to select a prerecorded video from a plurality of prerecorded videos based on the logged data stored in the memory device (25, 26, 96, 98) and on the determined welding deficiency, and
to display the selected prerecorded video on the display;
wherein the prerecorded video comprises a tutorial video, a training video, a diagnostics video, a configuration video, an informational video, a servicing video, or some combination thereof.

2. The system of claim 1, wherein the prerecorded video comprises a visual depiction of actual welding data adjacent to expected welding data.

3. The system of claim 1, comprising a welding torch (70) having the display.

4. The system of claim 1, comprising a welding power supply (12) having a processing device (22; 94) configured to transfer the prerecorded video to the display (30; 102).

5. The system of claim 1, comprising a data link (116, 118) configured to receive the prerecorded video from a remote device (88).

6. The system of claim 1, comprising a storage device (24; 96) configured to store the plurality of prerecorded videos.

7. The system of claim 1, comprising a data link (116, 118) configured to provide logged data associated with the welding application to a remote device (88).

8. The system of claim 4, wherein the welding power supply (12) comprises the display (30).

9. A method for training an operator to use a welding system (10; 84) comprising:
logging in a memory device (24, 26, 96, 98) actual data corresponding to a performed welding application, wherein the data comprise an orientation of a torch, a distance between a contact tip of the torch and a workpiece, a voltage , a current, welding device settings;
analyzing via a processor (22, 94) the logged data to determine a welding deficiency and to select a prerecorded video from a pluality of prerecorded videos based on the logged data stored in the memory device (24, 26, 96, 98) and on the determined welding deficiency,
displaying the selected prerecorded video selected from a plurality of prerecorded videos, wherein the plurality of prerecorded videos correspond to a welding application, and comprise tutorial videos, training videos, diagnostics videos, configuration videos, informational videos, servicing videos, or some combination thereof.

## Patentansprüche

1. Schweißsystem (10; 84), umfassend:
eine Anzeige (30; 102), die ausgelegt ist zum Anzeigen eines vorab aufgezeichneten Videos, das aus mehreren vorab aufgezeichneten Videos ausgewählt ist, wobei die mehreren vorab aufgezeichneten Videos einer Schweißanwendung entsprechen,
einen Prozessor (22, 94),
**dadurch gekennzeichnet, dass**
der Prozessor (22, 94) ausgelegt ist zum Protokollieren von Daten aus einer aktuell ausgeführten Schweißanwendung, wobei die Daten eine Ausrichtung eines Schweißbrenners, einen Abstand zwischen einer Kontaktspitze des Schweißbrenners und einem Werkstück, eine Spannung, einen Strom und Schweißgeräteinstellungen umfassen;
Speichern der protokollierten Daten in einer Speichervorrichtung (24, 26, 96, 98);
Analysieren der protokollierten Daten, um einen Schweißfehler zu bestimmen und ein vorab aufgezeichnetes Video von mehreren vorab aufgezeichneten Videos auszuwählen, basierend auf den protokollierten Daten, die in der Speichervorrichtung (25, 26, 96, 98) gespeichert sind, und auf dem bestimmten Schweißfehler, und
Anzeigen des ausgewählten vorab aufgezeichneten Videos auf der Anzeige;
wobei das vorab aufgezeichnete Video ein Lernvideo, ein Trainingsvideo, ein Diagnosevideo, ein Konfigurationsvideo, ein Informationsvideo, ein Wartungsvideo oder eine beliebige Kombination davon umfasst.

2. System nach Anspruch 1, wobei das vorab aufgezeichnete Video eine visuelle Darstellung von Ist-Schweißdaten neben Soll-Schweißdaten umfasst.

3. System nach Anspruch 1, umfassend einen Schweißbrenner (70) mit der Anzeige.

4. System nach Anspruch 1, umfassend eine Schweißstromversorgung (12) mit einer Verarbeitungsvorrichtung (22; 94), die ausgelegt ist zum Übertragen des vorab aufgezeichneten Videos an die Anzeige (30; 102).

5. System nach Anspruch 1, umfassend eine Datenverbindung (116, 118), die ausgelegt ist zum Empfangen des vorab aufgezeichneten Videos von einer entfernten Vorrichtung (88).

6. System nach Anspruch 1, umfassend eine Speichervorrichtung (24; 96), die ausgelegt ist zum Speichern der mehreren vorab aufgezeichneten Videos.

7. System nach Anspruch 1, umfassend eine Datenverbindung (116, 118), die ausgelegt ist zum Bereitstellen von protokollierten Daten, die mit der Schweißanwendung verknüpft sind, an eine entfernte Vorrichtung (88).

8. System nach Anspruch 4,
wobei die Schweißstromversorgung (12) die Anzeige (30) umfasst.

9. Verfahren zum Schulen eines Bedieners im Umgang mit einem Schweißsystem (10; 84), umfassend:
Protokollieren, in einer Speichervorrichtung (24, 26, 96, 98) von tatsächlichen Daten, die einer ausgeführten Schweißanwendung entsprechen, wobei die Daten eine Ausrichtung eines Schweißbrenners, einen Abstand zwischen einer Kontaktspitze des Schweißbrenners und einem Werkstück, eine Spannung, einen Strom und Schweißgeräteinstellungen umfassen;
Analysieren, durch einen Prozessor (22, 94), der protokollierten Daten, um einen Schweißfehler zu bestimmen und ein vorab aufgezeichnetes Video von mehreren vorab aufgezeichneten Videos auszuwählen, basierend auf den protokollierten Daten, die in der Speichervorrichtung (24, 26, 96, 98) gespeichert sind, und auf dem bestimmten Schweißfehler,
Anzeigen des ausgewählten vorab aufgezeichneten Videos, das aus mehreren vorab aufgezeichneten Videos ausgewählt ist, wobei die mehreren vorab aufgezeichneten Videos einer Schweißanwendung entsprechen und Lernvideos, Trainingsvideos, Diagnosevideos, Konfigurationsvideos, Informationsvideos, Wartungsvideos oder eine beliebige Kombination davon umfassen.

## Revendications

1. Système de soudage (10 ; 84) comprenant :
un afficheur (30 ; 102) configuré pour montrer une vidéo préenregistrée sélectionnée parmi une pluralité de vidéos préenregistrées, la pluralité de vidéos préenregistrées correspondant à une application de soudage,
un processeur (22, 94)
**caractérisé en ce que**
le processeur (22, 94) est configuré pour
consigner des données provenant d'une application de soudage exécutée effective, les données comprenant une orientation d'un chalumeau, une distance entre une extrémité de contact du chalumeau et une pièce à usiner, une tension, un courant, des réglages de dispositif de soudage ;
mémoriser les données consignées dans un dispositif de mémoire (24, 26, 96, 98) ;
analyser les données consignées pour déterminer un défaut de soudage et sélectionner une vidéo préenregistrée parmi une pluralité de vidéos préenregistrées en fonction des données consignées mémorisées dans le dispositif de mémoire (25, 26, 96, 98) et du défaut de soudage déterminé, et
afficher la vidéo préenregistrée sélectionnée sur l'afficheur ;
dans lequel la vidéo préenregistrée comprend une vidéo de formation, une vidéo d'apprentissage, une vidéo de diagnostic, une vidéo de configuration, une vidéo d'information, une vidéo d'entretien, ou une combinaison de celles-ci.

2. Système selon la revendication 1, dans lequel la vidéo préenregistrée comprend une illustration visuelle de données de soudage effectives adjacentes à des données de soudage prévues.

3. Système selon la revendication 1, comprenant un chalumeau de soudage (70) présentant l'afficheur.

4. Système selon la revendication 1, comprenant une alimentation électrique de soudage (12) présentant un dispositif de traitement (22 ; 94) configuré pour transférer la vidéo préenregistrée sur l'afficheur (30 ; 102) .

5. Système selon la revendication 1, comprenant une liaison de données (116, 118) configurée pour recevoir la vidéo préenregistrée depuis un dispositif distant (88) .

6. Système selon la revendication 1, comprenant un dispositif de mémorisation (24 ; 96) configuré pour mémoriser la pluralité de vidéos préenregistrées.

7. Système selon la revendication 1, comprenant une liaison de données (116, 118) configurée pour fournir des données consignées associées à l'application de soudage à un dispositif distant (88).

8. Système selon la revendication 4, dans lequel l'alimentation électrique de soudage (12) comprend l'afficheur (30).

9. Procédé de formation d'un opérateur à l'utilisation d'un système de soudage (10 ; 84) comprenant :
la consignation dans un dispositif de mémoire (24 26, 96 98) de données effectives correspondant à une application de soudage exécutée, dans lequel les données comprennent une orientation d'un chalumeau, une distance entre une extrémité de contact du chalumeau et une pièce à usiner, une tension, un courant, des réglages de dispositif de soudage ;
l'analyse par l'intermédiaire d'un processeur (22, 94) des données consignées pour déterminer un défaut de soudage et sélectionner une vidéo préenregistrée parmi une pluralité de vidéos enregistrées en fonction des données consignées mémorisées dans le dispositif de mémoire (24, 26, 96, 98) et du défaut de soudage déterminé,
l'affichage de la vidéo préenregistrée sélectionnée, sélectionnée parmi une pluralité de vidéos préenregistrées, la pluralité de vidéos préenregistrées correspondant à une application de soudage, et comprenant des vidéos de formation, des vidéos d'apprentissage, des vidéos de diagnostic, des vidéos de configuration, des vidéos d'information, des vidéos d'entretien, ou une combinaison de celles-ci.
